(19) Europäisches Patentamt
European Patent Office
Office européen des brevets

(11) EP 3 645 622 B1

(12) **EUROPEAN PATENT SPECIFICATION**

(45) Date of publication and mention
of the grant of the patent:
**12.11.2025 Bulletin 2025/46**

(21) Application number: **17915547.8**

(22) Date of filing: **28.06.2017**

(51) International Patent Classification (IPC):
*C08K 3/36* (2006.01)        *C08K 5/103* (2006.01)
*C08K 5/17* (2006.01)        *C08J 3/22* (2006.01)
*C08J 5/18* (2006.01)        *B32B 27/30* (2006.01)
*B32B 27/32* (2006.01)        *B32B 27/08* (2006.01)
*B32B 27/18* (2006.01)        *A01G 9/14* (2006.01)

(52) Cooperative Patent Classification (CPC):
(C-Sets available)
**C08K 3/36; A01G 9/1438; B32B 27/08;
B32B 27/18; B32B 27/306; B32B 27/32;
B32B 27/327; C08J 3/226; C08J 5/18; C08K 5/103;
C08K 5/17; C08K 5/175;** B32B 2250/24;
B32B 2264/102; B32B 2270/00;        (Cont.)

(86) International application number:
**PCT/CN2017/090524**

(87) International publication number:
**WO 2019/000268 (03.01.2019 Gazette 2019/01)**

(54) **FORMULATIONS FOR USE IN GREENHOUSE FILMS WITH HIGH TRANSPARENCY**

FORMULIERUNGEN ZUR VERWENDUNG FÜR GEWÄCHSHAUSFOLIEN MIT HOHER
TRANSPARENZ

FORMULATIONS DESTINÉES À ÊTRE UTILISÉES DANS DES FILMS POUR SERRES
PRÉSENTANT UNE TRANSPARENCE ÉLEVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.05.2020 Bulletin 2020/19**

(73) Proprietor: **Dow Global Technologies LLC**
**Midland, MI 48674 (US)**

(72) Inventors:
• **DU, Libo**
**Shanghai 201203 (CN)**
• **LIU, Andong**
**Shanghai 201203 (CN)**
• **CHEN, Yong**
**Shanghai 201203 (CN)**
• **CHEN, Hongyu**
**Shanghai 201203 (CN)**

(74) Representative: **Boult Wade Tennant LLP**
**Salisbury Square House**
**8 Salisbury Square**
**London EC4Y 8AP (GB)**

(56) References cited:
WO-A1-2017/045199        CN-A- 102 558 663
CN-A- 102 719 010        CN-A- 103 571 023
CN-A- 106 243 481        JP-A- S62 179 939
US-A1- 2015 218 365

EP 3 645 622 B1

(52) Cooperative Patent Classification (CPC): (Cont.)
B32B 2307/21; B32B 2307/70; B32B 2307/71;
B32B 2307/732; B32B 2410/00; B32B 2439/70;
B32B 2553/00; C08J 2323/08; C08J 2423/04;
C08K 2201/006; Y02A 40/25

C-Sets
**C08K 3/36, C08L 23/06;**
**C08K 3/36, C08L 23/0853;**

**C08K 5/103, C08L 23/06;**
**C08K 5/17, C08L 23/06;**
**C08K 5/175, C08L 23/06**

Description

## TECHNICAL FIELD

Embodiments described herein relate generally to formulations for use in polyolefin films, and specifically relate to formulations for use in greenhouse polyolefin films.

## BACKGROUND

Greenhouse films are widely used to modulate the environmental conditions, especially the temperature and humidity, and thus to enable the plant growth at higher growth rate and yield. Film clarity is critical especially in cold regions to let enough sunlight come into the greenhouse to raise the in-house temperature especially in the morning time. This enables the temperature in the greenhouse to be sufficient at lower temperature to avoid plant damage and also to increase the plant growth rate and yield at appropriate temperature and humidity.

Dripping is a phenomenon that can occur due to a temperature difference between the inside atmosphere and outside atmosphere of an "enclosed body" and localized cooling at the interface. The atmosphere within a greenhouse is saturated with water vapor which evaporates from the soil or from the plants, and the water vapor condenses dropwise on the inner surface of the cold greenhouse film to cause water dripping. Water droplets on the film greatly reduce the incident sunlight due to irregular reflection and the droplets that fall on the plants can result in physical damage.

To avoid dripping, anti-dripping agents may be used to make inner surface of greenhouse film hydrophilic in nature. Due to the hydrophilic nature of water, vapor condensed could then spread and drain away, assuring transmission of sunlight into the greenhouse and reducing any physical damage to plants. Higher levels of anti-dripping agents in films of greater than 2 wt.% of anti-drip agent in the film may be desired; however, difficulty in achieving higher loading levels have been encountered in the form of processability issues when making the films (e.g., unable to control film layer thickness) and/or potential negative effects on film properties (e.g., haze, clarity, mechanical properties).

Accordingly, there is a need for a formulation for use in polyolefin greenhouse films that allow for higher anti-drip agent loading levels without processability issues or negative effects on film properties.

## SUMMARY

Disclosed in embodiments herein are masterbatch formulations. The masterbatch formulation comprises from 40 to 82.5 wt.% of a polyolefin resin; from 0.5 to 10 wt.% of a hydrophilic fumed silica, wherein the hydrophilic fumed silica has a specific surface area of 30 $m^2/g$ to 750 $m^2/g$; and greater than or equal to 17 wt.% of an anti-dripping agent.

Also disclosed in embodiments herein are greenhouse or agriculture films comprising one or more layers, wherein at least one of the layers comprises a masterbatch formulation. The masterbatch formulation comprises from 40 to 82.5 wt.% of a polyolefin resin; from 0.5 to 10 wt.% of a hydrophilic fumed silica, wherein the hydrophilic fumed silica has a specific surface area of 30 $m^2/g$ to 750 $m^2/g$; and greater than or equal to 17 wt.% of an anti-dripping agent. Said greenhouse films comprise from 10 to 50 wt% of LDPE and from 50 to 85 wt% of LLDPE.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

FIG. 1 pictorially depicts a side view of accelerated anti-dripping test equipment.
FIG. 2 graphically depicts a comparison of layer thickness ratio change over time for inventive films made according to one or more embodiments shown or described herein versus comparative films.

## DETAILED DESCRIPTION

Reference will now be made in detail to embodiments of formulations having a high concentration of anti-dripping agents and films incorporating such formulations. The formulations described herein are suitable for use in greenhouse films, for example, monolayer or multilayer greenhouse films. It is noted, however, that this is merely an illustrative implementation of the embodiments disclosed herein. The embodiments are applicable to other technologies that are susceptible to similar problems as those discussed above. For example, the formulations described herein may be used in other flexible packaging applications, such as, heavy duty shipping sacks, liners, sacks, stand-up pouches, detergent pouches, sachets, food packaging films, etc., all of which are within the purview of the present embodiments. The formulations described herein are masterbatch formulations and comprise polyolefin resin, hydrophilic fumed silica, and anti-dripping agent, which are further detailed below.

Masterbatch Formulation

The masterbatch formulation comprises from 40 to 82.5 wt.% of a polyolefin resin; from 0.5 to 10 wt.% of a hydrophilic fumed silica, wherein the hydrophilic fumed silica has a specific surface area of 30 $m^2/g$ to 750 $m^2/g$; and greater than or equal to 17 wt.% of an anti-dripping agent. All individual values and subranges of from 40 to 82.5 wt.% of the polyolefin resin, from 0.5 to 10 wt.% of the hydrophilic fumed silica, and greater than or equal to 17 wt.% of the anti-dripping agent are included herein. For example, the masterbatch formulation may comprise a lower limit of from 40 wt.%, 45 wt.%, 50 wt.%, 55 wt.%, 60 wt.%, 65 wt.%, 70 wt.%, or 75 wt.% to an upper limit of 82.5 wt.%, 80 wt.%, 75 wt.%, 70 wt.%, 65 wt.%, 60 wt.%, 55 wt.% or 50 wt.% of the polyolefin resin; a lower limit of from 0.5 wt.%, 1.0 wt.%, 1.5 wt.%, 2.0 wt.% 2.5 wt.%, 5.0 wt.%, or 7.5 wt.% to an upper limit of 10 wt.%, 7.5 wt.%, 5.0 wt.%, 3.0 wt.%, or 2.5 wt.% of the hydrophilic fumed silica; and a lower limit of 17 wt.%, 20 wt.%, 22.5 wt.%, 25 wt.%, or 30 wt.% to an upper limit of 50 wt.%, 45 wt.%, 40 wt.%, 35 wt.%, 30 wt.%, or 25 wt.% of the anti-dripping agent. In some embodiments, the masterbatch formulation comprises from 40 to 82.5 wt.%, from 50 to 82.5 wt.%, from 65 to 82.5 wt.%, or from 70 to 82.5 wt.% of a polyolefin resin; from 0.5 to 10 wt.%, from 0.5 to 7.5 wt.%, from 0.5 to 5.0 wt.% or from 1.0 to 5.0 wt.% of a hydrophilic fumed silica; and from 17 to 50 wt.%, from 20 to 50 wt.%, from 20 to 40 wt.%, from 20 to 35 wt.%, or from 21 to 25 wt.% of the anti-dripping agent.

*Polyolefin Resin*

The polyolefin resin may be selected from the group consisting of low density polyethylene (LDPE), linear low density polyethylene (LLDPE), ethylene vinyl acetate (EVA), and blends thereof. The LDPE may include branched polymers that are partly or entirely homopolymerized or copolymerized in autoclave and/or tubular reactors, or any combination thereof, using any type of reactor or reactor configuration known in the art, at pressures above 14,500 psi (100 MPa) with the use of free-radical initiators, such as peroxides (see for example U.S. Pat. No. 4,599,392, herein incorporated by reference). In some embodiments, the LDPE may be made in an autoclave process under single phase conditions designed to impart high levels of long chain branching, such as described in PCT patent publication WO 2005/023912, Examples of suitable LDPEs may include, but are not limited to, ethylene homopolymers, and high pressure copolymers, including ethylene interpolymerized with, for example, vinyl acetate, ethyl acrylate, butyl acrylate, acrylic acid, methacrylic acid, carbon monoxide, or combinations thereof. The ethylene may also be interpolymerized with an alpha-olefin comonomer, for example, at least one C3-C20 alpha-olefin, such as propylene, isobutylene, 1-butene, 1-pentene, 1-hexene, and mixtures thereof. Exemplary LDPE resins may include, but is not limited to, resins sold by The Dow Chemical Company, such as, LDPE 722, LDPE 150E, LDPE 310E, LDPE 450E, LDPE 132I resins, LDPE 621I resins, LDPE 662I resins, or AGILITY™ 1000 and 2001 resins, resins sold by Westlake Chemical Corporation (Houston, TX), such as EF412, EF602, EF403, or EF601, resins sold by LyondellBasell Industries (Houston, TX), such as, PETROTHENE™ M2520 or NA940, and resins sold by The ExxonMobil Chemical Company (Houston, TX) such as, LDPE LD 051.LQ or NEXXSTAR™ LDPE-00328. Other exemplary LDPE resins are described in WO 2014/051682 and WO 2011/019563,

The low density polyethylene may have a density of from 0.910 g/cc to 0.935 g/cc. All individual values and subranges are included and disclosed herein. For example, in some embodiments, the low density polyethylene may have a density of from 0.910 g/cc to 0.930 g/cc, 0.910 g/cc to 0.925 g/cc, or 0.912 g/cc to 0.925 g/cc. In other embodiments, the low density polyethylene may have a density of from 0.915 g/cc to 0.935 g/cc, 0.915 g/cc to 0.930 g/cc, or 0.915 g/cc to 0.925 g/cc.

The low density polyethylene may have a melt index, or I2, of from 0.1 g/10 min to 25 g/10 min. All individual values and subranges are included and disclosed herein. For example, in some embodiments, the low density polyethylene may have a melt index from 1 to 20 g/10 min, 1 to 15 g/10 min, 2 to 15 g/10 min, or 2 g/10 min to 10 g/10 min.

The linear low density polyethylene may be a homogeneously branched or heterogeneously branched and/or unimodal or multimodal (e.g., bimodal) polyethylene. As used herein, "unimodal" refers to the molecular weight distribution (MWD), which is the weight average molecular weight (Mw) over the number average molecular weight (Mn), in a GPC curve does not substantially exhibit multiple component polymers (i.e., no humps, shoulders or tails exist or are substantially discernible in the GPC curve). In other words, the degree of separation is zero or substantially close to zero. As used herein, "multimodal" refers to the MWD in a GPC curve exhibits two or more component polymers, wherein one component polymer may even exist as a hump, shoulder or tail relative to the MWD of the other component polymer. The linear low density polyethylene comprises ethylene homopolymers, interpolymers of ethylene and at least one comonomer, and blends thereof. Examples of suitable comonomers may include alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the linear low density polyethylene is an ethylene/alpha-olefin copolymer, wherein the alpha-olefin is selected from the group consisting of propylene, 1-butene, 1-pentene, 1-hexene, 4-methyl-1-pentene, 1-heptene, 1-octene, 1-nonene and 1-decene. In other embodiments, the linear low density polyethylene is an ethylene/alpha-olefin copolymer, wherein the alpha-olefin is selected from the group consisting of propylene, 1-butene, 1-hexene, and 1-octene. In further embodiments, the linear low density polyethylene is an ethylene/alpha-olefin copolymer, wherein the alpha-olefin is selected from the group consisting of 1-hexene and 1-octene. In even further embodiments, the linear low density polyethylene is an ethylene/alpha-olefin copolymer, wherein the alpha-olefin is 1-octene. In even further embodiments, the linear low density polyethylene is a substantially linear ethylene/alpha-olefin copolymer, wherein the alpha-olefin is 1-octene. In some embodiments, the linear low density polyethylene is an ethylene/alpha-olefin copolymer, wherein the alpha-olefin is 1-butene.

In some embodiments, the linear low density polyethylene is an ethylene/alpha-olefin copolymer that may comprise greater than 50%, by weight, of the units derived from ethylene. All individual values and subranges of greater than 50%, by weight, are included and disclosed herein. For example, the linear low density polyethylene is an ethylene/alpha-olefin copolymer that may comprise at least 60%, at least 70%, at least 80%, at least 90%, at least 92%, at least 95%, at least 97%, at least 98%, at least 99%, at least 99.5%, from greater than 50% to 99%, from greater than 50% to 97%, from greater than 50% to 94%, from greater than 50% to 90%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene. The linear low density polyethylene is an ethylene/alpha-olefin copolymer that may comprise less than 30%, by weight, of units derived from one or more alpha-olefin comonomers. All individual values and subranges of less than 30%, by weight, are included herein and disclosed herein. For example, the linear low density polyethylene is an ethylene/alpha-olefin copolymer that may comprise less than 25%, less than 20%, less than 18%, less than 15%, less than 12%, less than 10%, less than 8%, less than 5%, less than 4%, less than 3%, from 0.2 to 15 %, 0.2 to 12%, 0.2 to 10%, 0.2 to 8%, 0.2 to 5%, 0.2 to 3%, 0.2 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282,

In some embodiments, the linear low density polyethylene is an ethylene/alpha-olefin copolymer that may comprise at least 90 percent by moles of units derived from ethylene. All individual values and subranges from at least 90 mole percent are included herein and disclosed herein; for example, the linear low density polyethylene is an ethylene/alpha-olefin copolymer that may comprise at least 93 percent, at least 95 percent, at least 96 percent, at least 97 percent, at least 98 percent, at least 99 percent, by moles, of units derived from ethylene; or in the alternative, the linear low density polyethylene is an ethylene/alpha-olefin copolymer that may comprise from 85 to 99.5 percent, from 85 to 99 percent, from 85 to 97 percent, from 85 to 95 percent, from 88 to 99.5 percent, from 88 to 99 percent, from 88 to 97 percent, from 88 to 95 percent, from 90 to 99.5 percent, from 90 to 99 percent, from 90 to 97 percent, from 90 to 95 percent, from 92 to 99.5, from 92 to 99 percent, from 92 to 97 percent, from 95 to 99.5, from 95 to 99 percent, from 97 to 99.5 percent, or from 97 to 99 percent, by moles, of units derived from ethylene. The linear low density polyethylene is an ethylene/alpha-olefin copolymer that may comprise less than 15 percent by moles of units derived from one or more a-olefin comonomers. All individual values and subranges from less than 15 mole percent are included herein and disclosed herein. For example, the linear low density polyethylene is an ethylene/alpha-olefin copolymer that may comprise less than 12 percent, less than 10 percent, less than 8 percent, less than 7 percent, less than 5 percent, less than 4 percent, or less than 3 percent, by moles, of units derived from one or more alpha-olefin comonomers; or in the alternative, the linear low density polyethylene is an ethylene/alpha-olefin copolymer that may comprise from 0.5 to 15 percent, from 0.5 to 12 percent, from 0.5 to 10 percent, 0.5 to 8 percent, 0.5 to 5 percent, 0.5 to 3 percent, 1 to 12 percent, 1 to 10 percent, 1 to 8 percent, 1 to 5 percent, 2 to 12 percent, 2 to 10 percent, 2 to 8 percent, 2 to 5 percent, 3 to 12 percent, 3 to 10 percent, 3 to 7 percent, by moles of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference.

Other examples of suitable linear low density polyethylene include substantially linear ethylene polymers, which are further defined in U.S. Pat. No. 5,272,236, U.S. Pat. No. 5,278,272, U.S. Pat. No. 5,582,923, U.S. Pat. No. 5,733,155, and EP2653392, homogeneously branched linear ethylene polymer compositions, such as those in U.S. Pat. No. 3,645,992, heterogeneously branched ethylene polymers, such as those prepared according to the process disclosed in U.S. Pat. No. 4,076,698; and/or blends thereof (such as those disclosed in U.S. Pat. No. 3,914,342 or U.S. Pat. No. 5,854,045), In some embodiments, the linear low density polyethylene may include ELITE™, ELITE™ AT, ATTANE™, AFFINITY™, FLEXOMER™, or DOWLEX™ resins sold by The Dow Chemical Company, including, for example, ELITE™ 5100G or 5400G resins, ELITE™ AT 6401 or 6101, ATTANE™ 4201 or 4202 resins, AFFINITY™ 1840, and DOWLEX™ 2020, 2045G, 2049G, 2645G, or 2685 resins; EXCEED™ or ENABLE™ resins sold by Exxon Mobil Corporation, including, for example, EXCEED™ 1012, 1018 or 1023JA resins, and ENABLE™ 27-03, 27-05, 35-05, or 20-10 resins; linear low density polyethylene resins sold by Westlake Chemical Corporation, including, for example, LLDPE LF1020 or HIFOR Xtreme™ SC74836 resins; linear low density polyethylene resins sold by LyondellBasell Industries, including, for example, PETROTHENE™ GA501 and LP540200 resins, and ALATHON™ L5005 resin; linear low density polyethylene resins sold by Nova Chemicals Corp., including, for example, SCLAIR™ FP120 and NOVAPOL™ TF-Y534; linear low density polyethylene resins sold by Chevron Phillips Chemical Company, LLC, including, for example, mPACT™ D139 or D350 resins and MARFLEX™ HHM TR-130 resin; linear low density polyethylene resins sold by Borealis AG, including, for example, BORSTAR™ FB 2310 resin.

The linear low density polyethylene can be made via gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. Suitable linear low density polyethylene may be produced according to the processes described at pages 15-17 and 20-22 in WO 2005/111291 A1, The catalysts used to make the linear low density polyethylene described herein may include Ziegler-Natta, chrome, metallocene, constrained geometry, or single site catalysts. In some embodiments, the LLDPE may be a znLLDPE, which refers to linear polyethylene made using Ziegler-Natta catalysts, a uLLDPE or "ultra linear low density polyethylene," which may include linear polyethylenes made using Ziegler-Natta catalysts, or a mLLDPE, which refers to LLDPE made using metallocene or constrained geometry catalyzed polyethylene. In some embodiments, unimodal LLDPE may be prepared using a single stage polymerization, e.g. slurry, solution, or gas phase polymerization. In some embodiments, the unimodal LLDPE may be prepared via solution polymerization. In other embodiments, the unimodal LLDPE may be prepared via slurry polymerization in a slurry tank. In another embodiment, the unimodal LLDPE may be prepared in a loop reactor, for example, in a single stage loop polymerization process. Loop reactor processes are further described in WO/2006/045501 or WO2008104371. Multimodal (e.g. bimodal) polymers can be made by mechanical blending of two or more separately prepared polymer components or prepared in-situ in a multistage polymerization process. Both mechanical blending and preparation in-situ. In some embodiments, a multimodal LLDPE may be prepared in-situ in a multistage, i.e. two or more stage, polymerization or by the use of one or more different polymerization catalysts, including single-, multi- or dual site catalysts, in a one stage polymerization. For example, the multimodal LLDPE is produced in at least two-stage polymerization using the same catalyst, for e.g. a single site or Ziegler-Natta catalyst, as disclosed in U.S. Patent 8,372,931 Thus, for example two solution reactors, two slurry reactors, two gas phase reactors, or any combinations thereof, in any order can be employed, such as disclosed in U.S. Pat. Nos. 4,352,915 (two slurry reactors), 5,925,448 (two fluidized bed reactors), and 6,445,642 (loop reactor followed by a gas phase reactor). However, in other embodiments, the multimodal polymer, e.g. LLDPE, may be made using a slurry polymerization in a loop reactor followed by a gas phase polymerization in a gas phase reactor, as disclosed in EP 2653392 A1,

In embodiments herein, the linear low density polyethylene has a density of 0.900 to 0.965 g/cc. All individual values and subranges from 0.900 to 0.965 g/cc are included and disclosed herein. For example, in some embodiments, the linear low density polyethylene has a density of 0.910 to 0.935 g/cc, 0.910 to 0.930 g/cc, 0.910 to 0.927 g/cc, or 0.910 to 0.925 g/cc. In other embodiments, the linear low density polyethylene has a density of 0.915 to 0.940 g/cc, 0.915 to 0.935 g/cc, 0.915 to 0.930 g/cc, 0.915 to 0.927 g/cc, or 0.915 to 0.925 g/cc. In further embodiments, the linear low density polyethylene has a density of 0.930 to 0.965 g/cc, or 0.930 to 0.950 g/cc, or 0.930 to 0.940 g/cc. Densities disclosed herein are determined according to ASTM D-792.

In embodiments herein, the linear low density polyethylene has a melt index, or I2, of 0.05 g/10 min to 15 g/10 min. All individual values and subranges from 0.05 g/10 min to 15 g/10 min are included and disclosed herein. For example, in some embodiments, the linear low density polyethylene has a melt index of 0.05 g/10 min to 10 g/10 min, 0.05 g/10 min to 5 g/10 min, 0.1 g/10 min to 3 g/10 min, 0.1 g/10 min to 2 g/10 min, 0.1 g/10 min to 1.5 g/10 min, or 0.1 g/10 min to 1.2 g/10 min. In other embodiments, the linear low density polyethylene has a melt index of 0.2 g/10 min to 15 g/10 min, 0.2 g/10 min to 10 g/10 min, 0.2 g/10 min to 5 g/10 min, 0.2 g/10 min to 3 g/10 min, 0.2 g/10 min to 2 g/10 min, 0.2 g/10 min to 1.5 g/10 min, or 0.2 g/10 min to 1.2 g/10 min. Melt index, or I2, is determined according to ASTM D1238 at 190°C, 2.16 kg.

Ethylene vinyl acetate is a copolymer prepared by the polymerization of ethylene and vinyl acetate monomers. The ethylene-derived units in the copolymer may be present in amounts from 60 to 98 wt.%. All individual values and subranges are included and disclosed herein. For example, in some embodiments, the ethylene-derived units in the copolymer may be present in amounts from 60 to 95 wt.%, from 60 to 93 wt.%, from 60 to 91 wt.%, or from 65 to 91 wt.%. The vinyl acetate units in the copolymer may be present in amounts from 2 to 40 wt.%. All individual values and subranges are included and disclosed herein. For example, in some embodiments, the vinyl acetate units in the copolymer may be present in amounts from 5 to 40 wt.%, 7 to 40 wt.%, 9 to 40 wt.%, or from 9 to 35 wt.%. Suitable EVA resins may include the ELVAX™ EVA resins, available from DuPont (Wilmington, Delaware). The density of the EVA resin may be range 0.920 g/cc to about 0.980 g/cc or from 0.925 g/cc to 0.970 g/cc.

*Hydrophilic Fumed Silica*

Hydrophilic fumed silica is formed when silicon tetrachloride ($SiCl_4$) reacts in a hydrogen flame to form single, spherical droplets of silicon dioxide, which grow through collision and coalescence to form larger droplets. As the droplets cool and begin to freeze, but continue to collide, they stick together but do not coalesce, forming solid aggregates. The aggregates continue to collide to from clusters, known as agglomerates. The average primary particle size for the hydrophilic fumed silica particle refers to the average particle size of a single cooled spherical droplet, not to the size of the agglomerate. In embodiments herein, the hydrophilic fumed silica may have an average primary particle size of from 5 to 40 nm. All individual values and subranges are included or disclosed herein. For example, in some embodiments, the hydrophilic fumed silica may have an average primary particle size of from 7 to 40 nm. The average primary particle size may be determined using a transmission electron microscopy (TEM) image and a Zeiss particle size analyzer TGZ-3 to measure the particle size of approximately 2,000 to 10,000 particles using the ENDTER and GEBAUER method. The samples may be dispersed via ultrasound in an isopropanol/water mixture and applied to the TEM grid.
In embodiments herein, the hydrophilic fumed silica has a specific surface area of 30 $m^2$/g to 750 $m^2$/g. All individual values and subranges are included or disclosed herein. For example, in some embodiments, the hydrophilic fumed silica may have a specific surface area of 30 $m^2$/g to 450 $m^2$/g.

*Anti-Dripping Agent*

The anti-dripping agent may include at least one non-ionic surfactant component which is selected from the group consisting of polyoxyethylene esters, polyoxyethylene ethers, glycerol esters, polyglycerol esters, polyoxyethylene glycerine fatty acid ester, sorbitan esters, polyoxyethylene sorbitan fatty acid ester, pentaerythritol ester and other polyalcohol esters, diethanol amine esters, diethanol alkylamine, diethanol alkylamine esters, diethanol acylamine, diethanol acylamine esters, fatty acid diethanolamide, N- substituded diethanolamine, N-substituded diethanolamine esters, and combinations thereof. Of course, other agents that provide anti-drip properties to film are included and disclosed herein.

*Optional Additives*

One or more optional chemical or mineral additives may be added to the masterbatch formulation, which may include UV stabilizers, antioxidants, , anti-fogging agents, anti-dust agents, IR absorbers or reflectors, nucleating agents, nanocomposites, neutralizers, color concentrates, slip agents, foaming agents, anti-statics, specialty additives for specific applications, and combinations of two or more thereof. Exemplary UV stabilizers may include hindered amines, phosphites, benzophenones, benzotriazoles, salicylates, and nickel dialkyldithiocarbamates. Exemplary antioxidants may include aromatic amines and substituted phenolic compounds, for example, phenyl-$\beta$-napthylamine, di-$\beta$-napthyl-p-phenylenediamine, butylated hydroxyanisole, di-tert-butyl-p-cresol, and propyl gallate. Exemplary IR absorbers or reflectors may include calcined clay or hydrotalcite. Exemplary neutralizers may include calcium carbonate, calcium stearate, and zinc stearate. Exemplary slip agents may include silicones, stearamide, oleamide, and erucamide. The slip agent may also be employed to facilitate delamination of the polymer layers. Exemplary anti-statics may include substantially straight-chain and saturated aliphatic tertiary amines, ethoxylated or propoxylated polydiorganosiloxanes, and alkali metal alkanesulfonates. Each of the one or more optional additives may be present in the formulation in an amount of from 0.05 to 10 wt.%. In some embodiments herein, the formulation comprises one or more of an antioxidant, a UV stabilizer, or an anti-fogging agent. In other embodiments herein, the formulation comprises from 0.05 to 10 wt.% of the one or more of an antioxidant, a UV stabilizer, or an anti-fogging agent.

*Films*

The masterbatch formulations may be used in greenhouse or agricultural films. The greenhouse or agriculture film may comprise one or more layers, wherein at least one of the layers comprises the masterbatch formulations described herein. The masterbatch formulation may be added in an amount sufficient to allow the anti-dripping agent to be present in at least one of the layers in an amount of 2 wt.% to 5 wt.%. or 3 wt.% to 5 wt.%

While various other components and amounts are contemplated for the greenhouse or agricultural film, the key components are LDPE and LLDPE. In one or more embodiments, the greenhouse or agricultural film comprises from 15 to 50 wt.% of LDPE. In another embodiment, the greenhouse or agricultural film may comprise from 50 to 85 wt.% or 60 to 85 wt.% of LLDPE. In further embodiments, the greenhouse or agricultural film comprises from 15 to 50 wt.% of LDPE and from 50 to 85 wt.% or 60 to 85 wt.% of LLDPE. In optional embodiments of the present disclosure, ethylene vinyl acrylate may be included in the present in the greenhouse or agricultural film. However, in other embodiments of the present disclosure, the core layer, the sub-skin layers, and the skin layers may be substantially free of acrylate polymers, such as ethylene vinyl acrylate. As used herein, "substantially" means less than 0.5 wt.%, or less than 0.1 wt.% of the acrylate polymers. In embodiments herein, the greenhouse or agricultural film may be substantially free of propylene-based polymers. As used herein, "substantially" means less than 0.5 wt.%, or less than 0.1 wt.% of propylene-based polymers.

Various thicknesses are contemplated for the greenhouse or agricultural films. For example, the greenhouse or agricultural film may have an overall thickness from 50 to 150 $\mu$m, or from 50 to 100 $\mu$m. /

The greenhouse or agricultural film according to the present disclosure may be produced using known co-extrusion techniques. The film can be the result of blown co-extrusion or cast co-extrusion. In some embodiments, the greenhouse or agricultural film described herein is produced using blown co-extrusion.

**TEST METHODS**

The test methods used in the application and the following examples are included below.

Melt index ($I_2$)

Melt index ($I_2$) is measured in accordance to ASTM D-1238 at 190°C at 2.16 kg. The values are reported in g/10 min, which corresponds to grams eluted per 10 minutes.

Density

Samples for density measurement are prepared according to ASTM D4703 and reported in grams/cubic centimeter (g/cc or g/cm$^3$). Measurements are made within one hour of sample pressing using ASTM D792, Method B.

Specific Area

The specific area of different inorganic fillers is measured according to ISO 9277. The results are reported in m$^2$/g.

Viscosity

The viscosity of 10 wt.% of inorganic filler dispersed in an anti-drip agent is measured on an AR2000ex (TA instrument) with a D=25mm ETC steel plate. The angular frequency is 100 rad/s. Strain is 2%. The results are reported in Pa·s at 180°C.

Haze

The haze is measured in accordance with ASTM D1003 using BYK Gardner Haze-gard meter. The results are reported in %.

Clarity

Clarity is measured in accordance with the BYK test method using a BYK Gardner Haze-gard meter. The results are reported in %.

Anti-Dripping

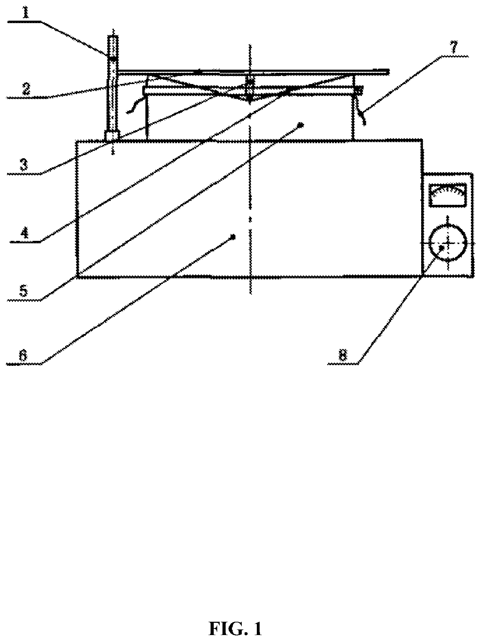

The film anti-dripping performance is tested according to Chinese National Standard GB 4455-2006, as illustrated in FIG. 1. FIG. 1 depicts accelerated anti-dripping test equipment having a thermocouple (1), pressing plate (2), pressing cone (3), claims (4), cage (5), water bath (6), film (7), and controller (8). The film **7** is clamped on a cage **5** of a water bath **6** to form an enclosed space and there is a 15 degree slope angle of the film **7** generated by a pressing cone 3. The water in the water bath is heated to 60 °C and the water vapor will condense and form a thin layer of water on the film 7. Condensed water flows back to water bath and normally the anti-dripping agent will be gradually washed away. Non-transparent water droplet will form onto the inner surface of the film to show anti-dripping performance.

The criteria of failure is set as follows: Non-transparent water droplet area is larger than 30% of the total film area. The anti-dripping service time is recorded (days) when the anti-dripping performance fails.

Run Stability Test

One film sample is collected every minute for a total of 10 film samples of each film collected in 10 minutes. 10 film samples placed along the machine direction (MD) with the same position on transverse direction (TD) are selected for layer thickness test by microscopy.

$$\text{LLDPE Layer thickness ratio} = \text{LLDPE layer thickness/total film thickness}$$

**EXAMPLES**

The following examples illustrate features of the present disclosure but are not intended to limit the scope of the disclosure. Table 1 lists the resins used in the Examples below. Table 2 lists the additives used in the Examples below.

**Table 1: Resins Used in the Examples**

| Resins | Type | MI, I2 (g/10 min) | Density (g/cc) | Available From |
|---|---|---|---|---|
| LDPE 722 | LDPE | 8.0 | 0.918 | The Dow Chemical Company (Midland, MI) |
| LDPE 150E | LDPE | 0.25 | 0.921 | The Dow Chemical Company |
| LDPE 310E | LDPE | 0.75 | 0.923 | The Dow Chemical Company |
| LDPE 2426H | LDPE | 2.0 | 0.922 | BASF-YPC Co., Ltd. (Nanjing, China) |
| DOWLEX™ 2645G | LLDPE | 0.9 | 0.919 | The Dow Chemical Company |
| DOWLEX™ 2049G | LLDPE | 1.0 | 0.926 | The Dow Chemical Company |

**Table 2: Additives Used in the Examples**

| Resins | Description | Available From |
|---|---|---|
| LY-6 | Anti-dripping agent: mixture of polyoxyethylene esters, glycerol esters, diethanol amine, and diethanol amine esters. | Lin'an Chemical Co. (Lin'an, China) |
| AEROSIL™ 380 | Fumed Silica | Evonik Specialty Chemicals (Shanghai, China) |
| SIPERNAT™ 50S | Precipitated Silica | Evonik Specialty Chemicals (Shanghai, China) |
| LANHUA | Nano-$CaCO_3$ | Huaming High-Tech (Shanghai, China) |
| MAGCELER™ 1 | Layered double hydroxides | Kyowa Chemical (Kagawa, Japan) |
| HL-3 | Commercial anti-dripping masterbatch that has about 18 wt.% of LY-6, 6 wt.% of silicate filler, and the remainder is LLDPE. | Liaocheng Kexin Plastic Company (Liaocheng, China) |

**Table 3: Inorganic Filler Properties**

| Resins | Description | Particle Size | Specific Area $(m^2/g)$ | Viscosity of 10 wt.% Filler/LY-6 (Pa·s at 180°C) |
|---|---|---|---|---|
| AEROSIL™ 380 | Fumed Silica | Primary particle size 7-40nm | 380 | 390 |
| SIPERNAT™ 50S | Precipitated Silica | Primary particle size 40-80nm | 25 | 0.2 |
| LANHUA | Nano-CaCO$_3$ | D50=0.5um | 8 | 0.5 |
| MAGCELER™ 1 | Layered double hydroxides | D50=18um | 500 | 0.8 |

The influence of different inorganic fillers on the melt viscosity of the anti-dripping agent was analyzed. As shown in Table 3, the anti-dripping agent with fumed silica showed a significant improvement in the melt viscosity. A higher melt viscosity of the anti-dripping agent may help to disperse the anti-dripping agent better in the masterbatch and film.

**Table 4. Anti-Dripping Masterbatch Formulations**

| | Inventive MB1 | Inventive MB2 |
|---|---|---|
| LY-6 (wt.%) | 18 | 24 |
| AEROSIL™ 380 (wt.%) | 2 | 2.7 |
| LDPE 722 (wt.%) | 80 | 73.3 |

A ZSE27 twin screw extruder is used to fabricate the anti-dripping masterbatch in Table 4. Fumed silica and LY-6 are premixed together when the LY6 is melted. The mixture is stirred at 300 RPM for 10 min by a mechanical stirrer. Then the mixture is cooled and broken up into small pellets. LDPE 722 is fed at the main feeding port. The fumed silica/LY-6 mixture pellets is added at a side feeding port. The screw speed is 200 RPM, the feed rate is 12 kg/h. The barrel temperature set is 180°C for LDPE. The extrudate is pelletized after water cooling.

**Table 5. LLDPE Layer Formulations of 2-layer LLDPE/LDPE Films**

| | Comparative example 1 | Comparative example 2 | Inventive example 1 | Inventive example 2 |
|---|---|---|---|---|
| HL-3 (wt.%) | 16.7 | 22.2 | | |
| Inv. MB1 (wt.%) | | | 22.2 | |
| Inv. MB2 (wt.%) | | | | 16.7 |
| DOWLEX™ 2645G (wt%) | 83.3 | 77.8 | 77.8 | 83.3 |
| LY6 concentration in LLDPE layer (wt%) | 3 | 4 | 4 | 4 |

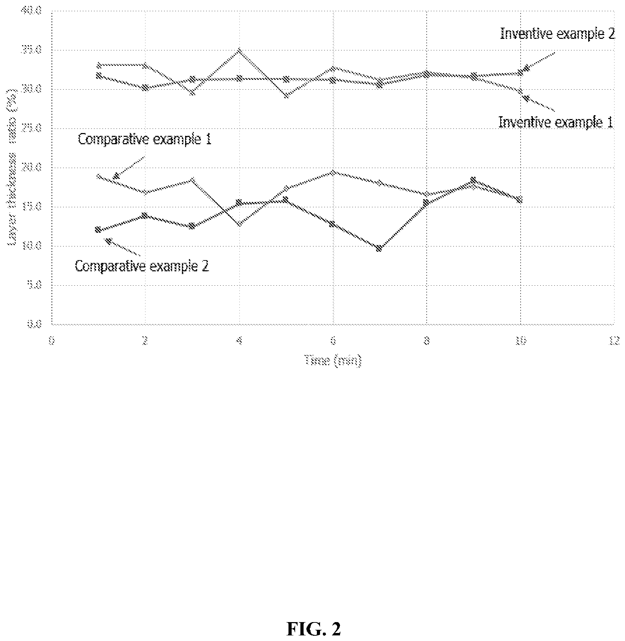

2-layer co-ex LLDPE/LDPE films with different anti-dripping masterbatch are prepared for evaluation of run stability. The LLDPE layer formulations are shown in Table 5. The LDPE layer is 100 wt.% of LDPE 2426H. The LLDPE+ masterbatch uses extruder A, LDPE layer uses the other six extruders B, C, D, E, F, G. The screw speed for 7 extruders is A/B/C/D/E/F/G=60/20/20/20/20/20rpm. The temperature of each extruder (A/B/C/D/E/F/G) is: 170/205/205/205/205205/205 °C. The die temperature is set at 205°C. The blow up ratio is 2. After achieving stable bubble and pressure, film samples are collected once every minute. A total 10 samples are collected for testing. The LLDPE Layer thickness ratio (LLDPE layer thickness/ total film thickness) versus time with different anti-dripping masterbatches is shown in FIG. 2. The curves shown in FIG. 2 of inventive examples 1 and 2 show more stable processability than that of comparative examples 1 and 2.

**Table 6A. 5-Layer Film Formulations**

| | Inner layer | Sub-skin layer | Core layer | Sub-skin layer | Outer layer |
|---|---|---|---|---|---|
| Comparative example 3 | 83.3 wt.% DOWLEX™ 2645G + 16.7 wt.% HL-3 | 83.3 wt.% DOWLEX™ 2645G + 16.7 wt.% HL-3 | 83.3 wt.% LDPE 150E + 16.7 wt.% HL-3 | 83.3 wt.% DOWLEX™ 2645G + 16.7 wt.% HL-3 | 84.4 wt.% DOWLEX™ 2049G + 10 wt.% LDPE 310E + 5.6 wt.% HL-3 |
| Comparative example 4 | 88.9 wt.% DOWLEX™ 2645G + 11.1 wt.% HL-3 | 88.9 wt.% DOWLEX™ 2645G + 11.1 wt.% HL-3 | 88.9 wt.% LDPE 150E + 11.1 wt.% HL-3 | 88.9 wt.% DOWLEX™ 2645G + 11.1 wt.% HL-3 | 84.4 wt.% DOWLEX™ 2049G + 10 wt.% LDPE 310E + 5.6 wt.% HL-3 |
| Inventive example 3 | 87.5 wt.% DOWLEX™ 2645G + 12.5 wt.% Inv. MB2 | 87.5 wt.% DOWLEX™ 2645G + 12.5 wt.% Inv. MB2 | 87.5 wt.% LDPE 150E + 12.5 wt.% Inv. MB2 | 87.5 wt.% DOWLEX™ 2645G + 12.5 wt.% Inv. MB2 | 85.8 wt.% DOWLEX™ 2049G + 10 wt.% LDPE 310E + 4.2 wt.% Inv. MB2 |
| Inventive example 4 | 87.5 wt.% DOWLEX™ 2645G + 12.5 wt.% Inv. MB2 | 83.3 wt.% DOWLEX™ 2645G + 16.7 wt.% Inv. MB2 | 83.3 wt.% LDPE 150E + 16.7 wt.% Inv. MB2 | 83.3 wt.% DOWLEX™ 2645G + 16.7 wt.% Inv. MB2 | 85.8 wt.% DOWLEX™ 2049G + 10 wt.% LDPE 310E + 4.2 wt.% Inv. MB2 |

**Table 6B. 5-Layer Film Formulations**

| | LY-6 content (wt%) | Layer thickness (um) |
|---|---|---|
| Comparative example 3 | 3/3/3/3/1 | 16/16/16/16/16 |
| Comparative example 4 | 2/2/2/2/1 | 16/16/16/16/16 |
| Inventive example 3 | 3/3/3/3/1 | 16/16/16/16/16 |
| Inventive example 4 | 3/4/4/4/1 | 14.5/14.5/22.0/14.5/14.5 |

Blown films are fabricated on a 7-layer co-extrusion blown film line with screw diameter of 30mm. The die diameter is 120mm. Die lip is 1.5mm. Extruder temperature is set at 170/205/205/205/205/205/205°C. The die temperature is set at 205°C. The layer thickness is adjusted through screw speed. The haul off speed is 4.8m/min. The frost line height is controlled in 25-30 cm range. The blow up ratio is 2.3. The film thickness is 80 μm. The films are tested for optical performance and anti-dripping performance, which is shown below in Tables 7 and 8.

**Table 7. Optical Performance of 5-Layer Films**

| | Haze (%) | Clarity (%) |
|---|---|---|
| Comparative example 4 | 13.7±0.2 | 97.0±0.1 |
| Inventive example 3 | 12.4±0.3 | 97.6±0.1 |
| Inventive example 4 | 12.6±0.2 | 97.7±0.2 |

As shown in Table 7, the film transparency is improved by using the inventive anti-dripping masterbatches as indicated by a lower haze value, even at higher anti-dripping agent loading.

**Table 8. Anti-Dripping Performance of 5-Layer Films**

| | Anti-dripping lifetime (day) |
|---|---|
| Comparative example 4 | 18 |
| Inventive example 3 | 25 |
| Inventive example 4 | 38 |

As shown in Table 8, the anti-dripping performance of the inventive 5-layer films is much longer than that of the comparative example 4.

It will be apparent that modifications and variations are possible without departing from the scope of the disclosure defined in the appended claims. More specifically, although some aspects of the present disclosure are identified herein as preferred or particularly advantageous, it is contemplated that the present disclosure is not necessarily limited to these aspects.

**Claims**

1. A masterbatch formulation comprising:

   from 40 to 82.5 wt.% of a polyolefin resin;
   from 0.5 to 10 wt.% of a hydrophilic fumed silica, wherein the hydrophilic fumed silica has a specific surface area of 30 $m^2$/g to 750 $m^2$/g; (measured according ISO 9277) and
   greater than or equal to 17 wt.% of an anti-dripping agent.

2. The formulation of claim 1, wherein the polyolefin resin is selected from the group consisting of low density polyethylene, linear low density polyethylene, ethylene vinyl acetate, and combinations thereof.

3. The formulation of claims 1 or 2, wherein the hydrophilic fumed silica has a specific surface area of 30 $m^2$/g to 450 $m^2$/g. (measured according ISO 9277)

4. The formulation of claims 1-3, wherein the anti-dripping agent include at least one non-ionic surfactant component which is selected from the group consisting of polyoxyethylene esters, polyoxyethylene ethers, glycerol esters, polyglycerol esters, polyoxyethylene glycerine fatty acid ester, sorbitan esters, polyoxyethylene sorbitan fatty acid ester, pentaerythritol ester and other polyalcohol esters, diethanol amine esters, diethanol alkylamine, diethanol alkylamine esters, diethanol acylamine, diethanol acylamine esters, fatty acid diethanolamide, N- substituded diethanolamine and N- substituded diethanolamine esters, and combinations thereof.

5. The formulation of claims 1-4, wherein the formulation comprises from 17 wt.% to 50 wt.% of the anti-dripping agent.

6. The formulation of claims 1-5, wherein the formulation comprises one or more of an antioxidant, a UV stabilizer, or an anti-fogging agent.

7. The formulation of claim 6, wherein the formulation comprises from 0.05 to 10 wt.% of the one or more of an antioxidant, a UV stabilizer, or an anti-fogging agent.

8. A greenhouse film comprising one or more layers, wherein at least one of the layers comprises the masterbatch formulation of claims 1-7, wherein the anti-dripping agent of the masterbatch formulation is present in at least one of the layers in an amount of 2 wt.% to 5 wt.%, and wherein the greenhouse film comprises from 15 to 50 wt.% of LDPE and from 50 to 85 wt.% of LLDPE.

**Patentansprüche**

1. Masterbatch-Formulierung, umfassend:

   zu 40 bis 82,5 Gew.-% ein Polyolefinharz;
   zu 0,5 bis 10 Gew.-% eine hydrophile pyrogene Kieselsäure, wobei die hydrophile pyrogene Kieselsäure einen spezifischen Oberflächenbereich von 30 $m^2$/g bis 750 $m^2$/g aufweist; (gemessen gemäß ISO 9277) und zu größer als oder gleich 17 Gew.-% ein Antitropfmittel.

2. Formulierung nach Anspruch 1, wobei das Polyolefinharz aus der Gruppe ausgewählt ist, bestehend aus Polyethylen niedriger Dichte, linearem Polyethylen niedriger Dichte, Ethylenvinylacetat und Kombinationen davon.

3. Formulierung nach Anspruch 1 oder 2, wobei die hydrophile pyrogene Kieselsäure einen spezifischen Oberflächenbereich von 30 $m^2$/g bis 450 $m^2$/g aufweist. (gemessen nach ISO 9277)

**4.** Formulierung nach den Ansprüchen 1 bis 3, wobei das Antitropfmittel mindestens eine nichtionische Tensidkomponente einschließt, die aus der Gruppe ausgewählt ist, bestehend aus Polyoxyethylenestern, Polyoxyethylenethern, Glycerinestern, Polyglycerinestern, Polyoxyethylenglycerinfettsäureestern, Sorbitanestern, Polyoxyethylensorbitanfettsäureestern, Pentaerythritester und anderen Polyalkoholestern, Diethanolaminestern, Diethanolalkylamin, Diethanolalkylaminestern, Diethanolacylamin, Diethanolacylaminestern, Fettsäurediethanolamid, N-substituiertem Diethanolamin und N-substituierten Diethanolaminestern und Kombinationen davon.

**5.** Formulierung nach den Ansprüchen 1 bis 4, wobei die Formulierung zu 17 Gew.-% bis 50 Gew.-% das Antitropfmittel umfasst.

**6.** Formulierung nach den Ansprüchen 1 bis 5, wobei die Formulierung ein oder mehrere eines Antioxidationsmittels, eines UV-Stabilisators oder eines Antibeschlagmittels umfasst.

**7.** Formulierung nach Anspruch 6, wobei die Formulierung zu 0,05 bis 10 Gew.-% das eine oder die mehreren eines Antioxidationsmittels, eines UV-Stabilisators oder eines Antibeschlagmittels umfasst.

**8.** Gewächshausfolie, umfassend eine oder mehrere Schichten, wobei mindestens eine der Schichten die Masterbatch-Formulierung nach den Ansprüchen 1 bis 7 umfasst, wobei das Antitropfmittel der Masterbatch-Formulierung in mindestens einer der Schichten in einer Menge von 2 Gew.-% bis 5 Gew.-% vorhanden ist und wobei die Gewächshausfolie zu 15 bis 50 Gew.-% LDPE und zu 50 bis 85 Gew.-% LLDPE umfasst.

**Revendications**

**1.** Formulation de mélange-maître comprenant :

de 40 à 82,5 % en poids d'une résine de polyoléfine ;
de 0,5 à 10 % en poids d'une silice pyrogénée hydrophile, dans laquelle la silice pyrogénée hydrophile a une surface spécifique de 30 m$^2$/g à 750 m$^2$g ; (mesurée selon la norme ISO 9277) et 17 % en poids ou plus d'un agent anti-goutte.

**2.** Formulation selon la revendication 1, dans laquelle la résine de polyoléfine est choisie dans le groupe constitué de polyéthylène basse densité, polyéthylène basse densité linéaire, éthylène-acétate de vinyle, et combinaisons de ceux-ci.

**3.** Formulation selon les revendications 1 ou 2, dans laquelle la silice pyrogénée hydrophile a une surface spécifique de 30 m$^2$/g à 450 m$^2$/g. (mesurée selon la norme ISO 9277)

**4.** Formulation selon les revendications 1 à 3, dans laquelle l'agent anti-goutte comporte au moins un composant tensioactif non ionique qui est choisi dans le groupe constitué d'esters de polyoxyéthylène, éthers de polyoxyéthylène, esters de glycérol, esters de polyglycérol, ester d'acide gras de polyoxyéthylène glycérol, esters de sorbitane, ester d'acide gras de polyoxyéthylène sorbitane, ester de pentaérythritol et autres esters de polyalcools, esters de diéthanolamine, diéthanol alkylamine, esters de diéthanol alkylamine, diéthanol acylamine, esters de diéthanol acylamine, diéthanolamide d'acide gras, diéthanolamine N-substituée et esters de diéthanolamine N-substituée, et combinaisons de ceux-ci.

**5.** Formulation selon les revendications 1 à 4, dans laquelle la formulation comprend de 17 % en poids à 50 % en poids de l'agent anti-goutte.

**6.** Formulation selon les revendications 1 à 5, dans laquelle la formulation comprend un ou plusieurs éléments parmi un antioxydant, un stabilisateur UV, ou un agent antibuée.

**7.** Formulation selon la revendication 6, dans laquelle la formulation comprend de 0,05 à 10 % en poids du ou des éléments parmi un antioxydant, un stabilisateur UV, ou un agent antibuée.

**8.** Film pour serre comprenant une ou plusieurs couches, dans lequel au moins l'une des couches comprend la formulation de mélange-maître selon les revendications 1 à 7, dans lequel l'agent anti-goutte de la formulation de mélange-maître est présent dans au moins l'une des couches en une quantité de 2 % en poids à 5 % en poids, et dans lequel le film pour serre comprend de 15 à 50 % en poids de PEBD et de 50 à 85 % en poids de PEBDL.

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4599392 A
- WO 2005023912 A
- WO 2014051682 A
- WO 2011019563 A
- US 7498282 B
- US 5272236 A
- US 5278272 A
- US 5582923 A
- US 5733155 A
- EP 2653392 A
- US 3645992 A
- US 4076698 A
- US 3914342 A
- US 5854045 A
- WO 2005111291 A1
- WO 2006045501 A
- WO 2008104371 A
- US 8372931 B
- US 4352915 A
- US 5925448 A
- US 6445642 B
- EP 2653392 A1